**Europäisches Patentamt**

**European Patent Office**

**Office européen des brevets**

(19)

(11) Veröffentlichungsnummer: **0 158 815**

**B1**

(12) # EUROPÄISCHE PATENTSCHRIFT

(45) Veröffentlichungstag der Patentschrift:
02.09.87

(21) Anmeldenummer: **85102702.9**

(22) Anmeldetag: **09.03.85**

(51) Int. Cl.⁴: **H 01 M 10/39**, H 01 M 2/06

(54) **Elektrochemische Speicherzelle.**

(30) Priorität: **02.04.84 DE 3412206**

(43) Veröffentlichungstag der Anmeldung:
**23.10.85 Patentblatt 85/43**

(45) Bekanntmachung des Hinweises auf die Patenterteilung:
**02.09.87 Patentblatt 87/36**

(84) Benannte Vertragsstaaten:
**BE FR GB IT NL**

(56) Entgegenhaltungen:
**EP-A-0 062 857**
**EP-A-0 064 656**
**EP-A-0 079 582**
**DE-A-3 325 836**

(73) Patentinhaber: **BROWN, BOVERI & CIE Aktiengesellschaft, Kallstadter Strasse 1, D-6800 Mannheim 31 (DE)**

(72) Erfinder: **Bühler, Werner, Kaltenweg 3, D-6901 Dossenheim (DE)**
Erfinder: **Mennicke, Stefan, Dr. Dipl.- Ing., Türkisweg 27, D-6906 Leimen (DE)**
Erfinder: **Reiss, Karl, Panoramastrasse 6, D-6909 Mühlhausen- Rettigheim (DE)**
Erfinder: **Terharn, Susanne, Mühlweg 3, D-6900 Heidelberg (DE)**

(74) Vertreter: **Kempe, Wolfgang, Dr., c/o BROWN, BOVERI & CIE AG ZPT Postfach 351, D-6800 Mannheim 31 (DE)**

**Beschreibung**

Die Erfindung bezieht sich auf eine elektrochemische Speicherzelle gemäß dem Oberbegriff des Patentanspruches 1.

Solche elektrochemischen Speicherzellen finden in vermehrtem Maße ihre Anwendung in Hochtemperatur-Speicherbatterien, die als Engergiequelle von Elektrofahrzeugen dienen.

Wiederaufladbare elektrochemische Speicherzellen auf der Basis von Alaklimetall und Chalkogen, deren Reaktandenräume durch einen Festelektrolyten voneinander getrennt sind, eignen sich sehr gut zum Aufbau von Hochtemperatur-Speicherbatterien. Die in diesen Speicherzellen verwendeten Festelektrolyten, die beispielsweise aus Betaaluminiumoxid gefertigt sind, zeichnen sich dadurch aus, daß die Teilleitfähigkeit der beweglichen Ionen durch sie hindurch sehr hoch und die Teilleitfähigket der Elektronen um viele Zehnerpotenzen kleiner ist.

Aus der DE-OS-31 45 112 ist eine elektrochemische Speicherzelle bekannt, die von außen durch ein becherförmiges Gehäuse aus Metall begrenzt wird. Im Inneren der Speicherzelle ist ein ebenso geformter Festelektrolyt aus Beta-Aluminiumoxid angeordnet. Am oberen offenen Ende des Festelektrolyten ist ein Isolierring aus Alpha-Aluminiumoxid angeordnet, der beispielsweise durch ein Glaslot mit dem Festelektrolyten verbunden ist. Der Isolierring ist so ausgebildet und so an dem Festelektrolyten befestigt, daß er die Funktion eines nach außen weisenden Flanschs übernimmt. Das die Speicherzelle begrenzende Gehäuse ist am oberen Ende mit einem nach innen oder außen weisenden Flansch versehen, auf welchen der Isolierring aufgesetzt und fest damit verbunden ist. Um bei solchen Speicherzellen eine lange Lebensdauer zu gewährleisten, muß ein hermetischer Verschluß der Reaktandenräume gegeneinander sowie der Speicherzelle nach außenhin sichergestellt werden. Bei den hier beschriebenen Speicherzellen ist dies nicht dauerhaft möglich, so daß nach einigen Betriebsstunden der Speicherzelle das Eindringen von Sauerstoff in die Reaktandenräume nicht auszuschließen ist.

Der Erfindung liegt deshalb die Aufgabe zugrunde die Verbindung des Festelektrolyten mit dem metallischen Gehäuse der Speicherzelle so zu optimieren, daß ein hermetischer Verschluß der Reaktandenräume gegeneinander und nach außenhin während der gesamten Lebensdauer der Speicherzelle sichergestellt wird.

Diese Aufgabe wird erfindungsgemäß durch die Merkmale des Patentanspruches 1 gelöst.

Weitere erfindungswesentliche Merkmale sind in den Unteransprüchen gekennzeichnet.

Durch das Anglasen eines Druckrings am oberen Ende des Festelektrolyten wird eine optimale Verbindung zwischen dem Festelektrolyten und dem metallischen Gehäuse sichergestellt. Zusätzlich ist am oberen Ende des Festelektrolyten ein Kompensationsring befestigt. Er dient zur Aufnahme der von dem Druckring ausgeübten Kräfte. Durch die Verwendung eines Druckrings und eines Kompensationsrings wird zudem die Beschädigung des Festelektrolyten bei Temperaturänderungen vollständig ausgeschlossen. Gleichzeitig wird ein optimaler Verschluß des zwischen dem Festelektrolyten und dem metallischen Gehäuse angeordneten Reaktandenraums sichergestellt. Es besteht die Möglichkeit den Druckring gleichzeitig als Stromkollektor für den zwischen dem Festelektrolyten und dem metallischen Gehäuse angeordneten Reaktandenraum zu verwenden. Falls der Kompensationsring im Inneren des Festelektrolyten angeordnet ist, kann dieser als Stromabnehmer für den hier vorgesehenen Reaktantenraum dienen. Durch einen metallischen Verschlußdeckel 12, der mit seinem äußeren Rand am oberen Ende des Kompensationsrings befestigt ist, läßt sich ein hermetischer Verschluß des im becherförmigen Festelektrolyten angeordneten Reaktandenraums bewirken. Der Kompensationsring ist entweder an der Innenfläche oder an der Außenfläche des becherförmigen Festelektrolyten befestigt. Vorzugsweise ist der Kompensationsring so an dem Festelektrolyten gehaltert, daß er einige Millimeter über dessen offenes Ende nach außen übersteht. Die Befestigung des Kompensationsrings erfolgt mittels einer Glasschicht, die zwischen dem Festelektrolyten und dem Kompensationsring angeordnet ist. Der Druckring wird ebenfalls mittels einer Glasschicht entweder am Kompensationsring oder an der Außenfläche des Festelektrolyten befestigt. Für den Fall, daß der Kompensationsring an der Außenfläche des Festelelektrolyten gehaltert ist, wird der Druckring so angeordnet, daß sein oberes Ende mit dem oberen Ende des Kompensationsrings abschließt. Sein äußerer Rand ist fest mit der Innenfläche des metallischen Gehäuses verbunden, welches die Speicherzelle nach außenhin begrenzt. Durch den Kompensationsring und den Druckring sowie die zwischen dem Festelektrolyten und dem Kompensationsring bzw. zwischen dem Kompensationsring und dem Druckring angeordnete Glasschicht wird der zwischen dem Festelektrolyten und dem metallischen Gehäuse vorgesehene Reaktandenraum vollständig nach außenhin abgeschlossen. Ist der Druckring direkt an der Außenfläche des Festelektrolyten befestigt, so wird die Glasschicht, die ihn an der Außenfläche des Festelektrolyten hält, so dick gewählt, daß der Druckring bis fast an die Innenfläche des metallischen Gehäuses heranreicht. Dadurch kann dieser so am Gehäuse befestigt werden, daß durch die Glasschicht und den Druckring ein vollständiger Verschluß des zwischen dem Festelektrolyten und dem metallischen Gehäuse vorgesehenen Reaktandenraums erzielt wird.

Bei der erfindungsgemäßen Speicherzelle ist sichergestellt, daß auch nach vielen Betriebsstunden der Verschluß so dicht ist, daß kein Sauerstoff von außen in die Reaktandenräume eindringen kann. Dadurch wird erreicht, daß die Reaktionsprodukte ständig für die Elektrodenreaktionen zur Verfügung stehen, so daß auch bei einer alten Speicherzelle ein Kapazitätsabfall nicht zu befürchten ist.

Die Erfindung wird nachfolgend anhand von Beispielen erläutert.

Es zeigen:

Figur 1: Eine erfindungsgemäße Speicherzelle,

Figur 2: eine Variante der in Figur 1 dargestellten Speicherzelle.

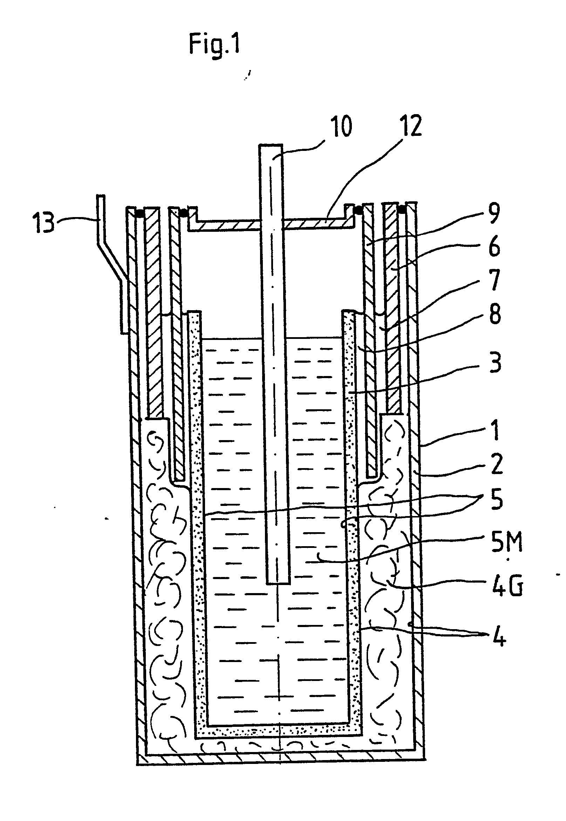

Figur 1 zeigt eine elektrochemische Speicherzelle 1 auf der Basis von Natrium und Schwefel. Die Speicherzelle wird im wesentlichen durch ein metallisches Gehäuse 2 und einen Festelektrolyten 3 gebildet. Das metallische Gehäuse ist becherförmig ausgebildet und auf seiner Innenseite mit einem Korrosionsschutz (hier nicht dargestellt) versehen. Im Inneren des metallischen Gehäuses 2 ist ein ebenfalls becherförmiger Festelektrolyt 3 angeordnet, der aus Beta-Aluminiumoxid gefertigt ist. Die Abmessungen des Festelektrolyten 3 sind so gewählt, daß zwischen den Innenflächen des Gehäuses 2 und seinen Außenflächen ein zusammenhängender Zwischenraum 4 verbleibt, der bei dem hier dargestellten Ausführungsbeispiel als Kathodenraum dient. Das Innere des Festelektrolyten 3 wird als Anodenraum 5 genutzt. Die Höhe des Festelektrolyten 3 ist so gewählt, daß sein oberes Ende einige Millimeter unterhalb des oberen Endes des metallischen Gehäuses 2 angeordnet ist. Bei dem hier dargestellten Ausführungsbeispiel ist am oberen offenen Ende des Festelektrolyten, insbesondere an dessen Außenfläche ein Druckring 6 befestigt. Erfindungsgemäß ist der Druckring 6 nicht direkt mit der Außenfläche des Festelektrolyten 3 verbunden. Vielmehr ist zwischen der Innenfläche des Druckrings 6 und der Außenfläche des Festelektrolyten 3 ein in zwei Glasschichten 7 und 8 wenigstens bereichsweise eingebetteter Kompensationsring 9 vorgesehen. Anstelle der beiden Glasschichten 7 und 8 kann auch jeweils eine Keramikschicht verwendet werden. Der Druckring 6 ist aus einem Metall, beispielsweise aus einem ferritischen Chromstahl gefertigt. Er kann andererseits auch aus einem Keramikmaterial hergestellt werden. Der zwischen den beiden Glasschichten 7 und 8 angeordnete Kompensationsring ist ebenfalls aus Metall gefertigt. Das für seine Herstellung verwendete Material ist so gewählt, daß es gegenüber Natrium beständig ist und einen nur wenig höheren Ausdehnungskoeffizienten als Beta-Aluminiumoxid besitzt. Vorzugsweise eignen sich für die Fertigung des Kompensationsrings Eisen-, Kobalt- oder Nickellegierungen. Der Kompensationsring 9 wird vor dem Verbinden mit dem Festelektrolyten 3 mit Chrom oder Niob plattiert. Bei der Herstellung der Speicherzelle 1, insbesondere bei der Verbindung des Festelektrolyten 3 mit dem Druckring 6 wird um das obere Ende des Festelektrolyten 3 beispielsweise ein Ring 8 aus Glas angeordnet. Der Durchmesser dieses Rings 8, der auch aus Keramik bestehen kann, ist so gewählt, daß er dem Außendurchmesser des Festelektrolyten 3 entspricht. Um diesen Ring, der die Glasschicht 8 bildet, wird der Kompensationsring 9 so angeordnet, daß sein unteres Ende etwa mit dem unteren Ende des die Glasschicht 8 bildenden Rings abschließt. Der Innendurchmesser des Kompensationsrings 9 ist so ausgebildet, daß er gerade über den die Glasschicht 7 bildenden Ring geschoben werden kann. Um den Kompensationsring 9 wird ein weiterer ebenfalls aus Glas gefertigter Ring 7 angeordnet. Das untere Ende des Kompensationsrings 9 kann im fertiggestellten Zustand der Speicherzelle vollständig von den beiden Glasschichten umgeben sein. Der um den Kompensationring angeordnete Glasring 7 wird selbst von dem Druckring 6 umgeben. Bei dem hier dargestellten Ausführungsbeispiel ist der die Glasschicht 7 bildende Ring so angeordnet, daß er sich im unteren und mittleren Bereich des Druckrings befindet und nach obenhin mit dem oberen Ende des Festelektrolyten abschließt. Der Druckring 6 ist so positioniert, daß sein unteres Ende mit dem unteren Ende der Glasschicht 7 abschließt. Die Abmessungen des Druckrings 6 und des Kompensationsrings 9 sind so gewählt, daß sie den Festelektrolyten um einige Millimeter nach obenhin überragen. Nachdem die Ringe 6, 7, 8 und 9 in der oben beschriebenen Art und Weise um das obere Ende des Festelektrolyten 3 angeordnet sind, wird diese Anordnung einer Wärmebehandlung ausgesetzt. Die Temperatur wird so hoch gewählt, daß die Ringe aus Glas schmelzen und der Druckring sich auszudehnen beginnt. Anschließend wird die so gebildete Verbindung unter den Transformationspunkt des Glases abgekühlt, wodurch die Glasschichten und der Kompensationsring durch den Druckring unter eine allseitige Druckspannung gesetzt werden. Hierdurch wird eine gasdichte, thermisch hoch belastbare, isolierende Verbindung zwischen dem Druckring 6 und dem Festelektrolyten 3 gebildet. Durch den Kompensationsring 9 wird sichergestellt, daß die von dem Druckring 6 ausgehenden Kräfte teilweise von den Glasschichten 7 und 8 von dem Kompensationsring aufgefangen werden. Hierdurch wird eine Beschädigung des Festelektrolyten, durch eine Einschnürung aufgrund der von dem Druckring 6 ausgehende Kräfte vollständig vermieden.

Die Abmessungen des Durckrings 6 und des Kompensationsrings 9 sowie der Schichten 7 und 8 sind so gewählt, daß sie nach der Verbindung mit dem Festelektrolyten 3 bzw. nach der Verbindung untereinander eine solche Breite aufweisen, daß der Druckring 6 bis zur Innenfläche des metallischen Gehäuses 2 reicht, und durch eine Schweißverbindung an der Innenfläche des metallischen Gehäuses 2 befestigt werden kann. Durch eine gute Wärmeableitung wird sichergestellt, daß die durch den Druckring erzeugte Druckspannung während des Schweißvorgangs erhalten bleibt.

Durch die direkte Verbindung des Druckrings 6 mit der Innenfläche des metallischen Gehäuses wird ein hermetischer Verschluß des Kathodenraums 4 erreicht, der zwischen dem Festelektrolyten 3 und dem metallischen Gehäuse 2 angeordnet ist. Bei dem hier dargestellten Ausführungsbeispiel ist der Kathodenraum mit einem Graphitfilz 4G ausgefüllt, der mit Schwefel getränkt ist. Der Innenraum des Festelektrolyten 3 dient als Anodenraum 5. Dieser ist mit Natrium und einer Metallwolle 5M gefüllt, die den Stromkolletor 10 fest umgibt. Der Stromableiter ist als Stab ausgebildet und ragt weit in den Festelektrolyten 3 hinein. Sein oberes Ende ist durch den Verschlußdeckel 12 der Speicherzelle hindurchgeführt und ragt einige Millimeter über diesen nach außen über.

Da der Druckring 6 aus einem Metall gefertigt ist, kann er die Funktion des kathodischen Stromkollektor übernehmen. Er ist leitend mit dem metallischen Gehäuse verbunden, so daß selbiges als äußeres Anschlußelement benutzt werden kann. Es besteht selbstverständlich die Möglichkeit, an der Außenfläche des Gehäuses, insbesondere am oberen Ende der Speicherzelle einen elektrischen Leiter zu befestigen, der über das metallische Gehäuse 2 elektrisch leitend mit dem als Stromkollektor dienenden Druckring 6 verbunden ist. Der Verschluß der Speicherzelle 1 nach außenhin erfolgt über ein Verschlußdeckel 12. Dieser ist im wesentlichen plattenförmig ausgebildet und mit einem nach oben weisenden flanschartig geformten Rand versehen, der an der Innenfläche des Kompensationsrings 9 befestigt ist.

Eine so ausgebildete Speicherzelle 1 kann auch als inverse Speicherzelle genutzt werden. Insbesondere ist es möglich den Anodenraum zwischen dem Festelektrolyten und dem metallischen Gehäuse 2 anzuordnen, während der Innenraum des Festelektrolyten 3 als Kathodenraum dient.

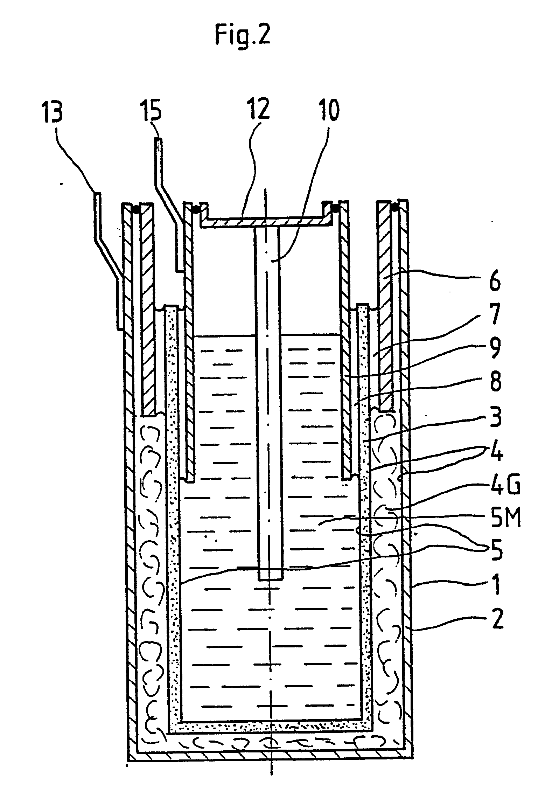

In Figur 2 ist eine Variante der erfindungsgemäßen Speicherzelle dargestellt. Die hier gezeigte Speicherzelle 1 wird im wesentlichen wiederum durch ein metallisches Gehäuse 2 und einen Festelektrolyten 3 gebildet. Das metallische Gehäuse 2 ist becherförmig ausgebildet und auf seiner Innenfläche mit einem Korrosionsschutz (hier nicht dargestellt) versehen. Der Festelektrolyt 3 ist im Inneren des metallischen Gehäuses 2 angeordnet und ebenfalls becherförmig ausgebildet. Seine Abmessungen sind so gewählt, daß zwischen den Innenflächen des metallischen Gehäuses 2 und den Außenflächen des Festelektrolyten 3 ein zusammenhängender Zwischenraum 4 gebildet wird, der als Kathodenraum dient. Dieser wird mit einem Graphitfilz 4G ausgefüllt, welcher mit Schwefel getränkt ist. Der Innenraum des Festelektrolyten 3 dient als Anodenraum 5 und ist mit Natrium sowie einer Metallwolle 5M gefüllt. Am oberen offenen Ende des Festelektrolyten ist auch bei dieser Ausführungsform ein Druckring 6 angeordnet. Der Druckring 6 ist über eine Glasschicht 7 mit der Außenfläche des Festelekrolyten 3 verbunden. Um eine Einschnürung des Festelektrolyten 3 durch die vom Druckring ausgeübten Kräfte zu vermeiden, ist ein Kompensationsring 9 an der Innenfläche des Festelektrolyten 3 befestigt. Seine Verbindung mit dem Festelektrolyten 3 erfolgt über eine Glasschicht 6. Der Kompensationsring 9 ist aus einer Eisen-Kobalt-Nickel-Legierung oder aus Molybdän gefertigt. Die Schichten 7 und 8 können auch durch Keramikschichten 7 und 8 gebildet werden. Die Verbindung des Druckrings 6 und des Kompensationsrings 9 mit dem Festelektrolyten 3 erfolgt in gleicher Weise wie in der Beschreibung zu Figur 1 erläutert. Der Druckring 6 ist hierbei wiederum aus einem metallischen Material gefertigt. Insbesondere wird hierfür ein Material verwendet, das einen großen Ausdehnungskoeffizienten aufweist. Es besteht die Möglichkeit den Druckring 6 direkt mit dem metallischen Gehäuse 2 durch Schweißen zu verbinden. Die Dicke der Glasschicht 7 und des Druckrings ist so gewählt, daß nach der Fertigstellung der Speicherzelle 1 der zwischen dem Festelektrolyten 3 und metallischen Gehäuse 2 angeordnete Kathodenraum 4 durch den Druckring 6 und die Glasschicht 7 gasdicht nach außenhin verschlossen ist. Der Druckring 6 kann, wenn er aus Metall gefertigt ist, gleichzeitig als Stromkollektor für den Kathodenraum dienen. Das metallische Gehäuse 2 kann in diesem Fall als Anschlußelement verwendet werden. Es besteht andererseits auch die Möglichkeit, am oberen Ende der Speicherzelle 1 einen elektrischen Leiter 13 mit dem metallischen Gehäuse 2 zu verbinden, der als Anschlußelement dient. Der zusammem mit den Glasschichten 7 und 8, die von Druckring 6 erzeugten Kräfte aufnehmende Kompensationsring 9, der bei dem hier dargestellten Ausführungsbeispiel mit der Innenfläche des Festelektrolyten 3 verbunden ist, dient als anodischer Stromkollektor. Durch die Glasschichten 7 und 6 wird eine elektrische Isolierung zwischen dem kathodischen Stromkollektor 6 und dem anodischen Stromkollektor 9 erzielt. Die Abmessungen des Kompensationsrings 9 sind so gewählt, daß er einige Millimeter über das obere Ende des Festelektrolyten 3 hinausragt. Der Innenraum des Festelektrolyten 3 ist durch einen Verschlußdeckel 12 nach außen hin verschlossen, der an die Innenfläche des Kompensationsrings 9 angeschweißt ist. An dem Verschlußdeckel 12 ist der anodische Stromabnehmer 10 befestigt, der tief in den Anodenraum 5 hineinragt und elektrisch leitend über den Verschlußdeckel 12 und den Kompensationsring 9 mit einem anodischen Anschlußelement 15 verbunden ist, das an der Außenfläche des Kompensationsrings 9 befestigt ist.

Diese Speicherzelle 1 kann ebenfalls als inverse Speicherzelle betrieben werden.

**Patentansprüche**

1. Elektrochemische Speicherzelle (1) auf der Basis von Alkalimetall und Chalkogen mit mindestens einem Anodenraum (5) und einem Kathodenraum (4), die durch einen alkaliionenleitenden Festelektrolyten (3) voneinander getrennt und wenigstens bereichsweise von einem metallischen Gehäuse (2) begrenzt sind, wobei der Festelektrolyt (3) an seinem offenen Ende über ein Verbindungselement (6) an dem Gehäuse (2) befestigt ist, dadurch gekennzeichnet, daß am offenen Ende des Festelektrolyten (3) mindestens ein als Druckring (6) ausgebildetes Verbindungselement und wenigstens ein die von dem Druckring (6) ausgehenden Kräfte aufnehmender Kompensationsring (9) befestigt sind.

2. Elektrochemische Speicherzelle nach Anspruch 1, dadurch gekennzeichnet, daß der Druckring (6) aus Metall oder Keramik, vorzugsweise aus ferritischem Chromstahl gefertigt ist.

3. Elektrochemische Speicherzelle nach einem der Ansprüche 1 oder 2, dadurch gekennzeichnet, daß der Druckring (6) und der Kompensationsring (9) konzentrisch um den Festelektrolyten (3) so angeordnet sind, daß der Kompensationsring (9) zwischen dem Festelektrolyten (3) und dem Druckring (6) positioniert ist.

4. Elektrochemische Speicherzelle nach einem der Ansprüche 1 bis 3, dadurch gekennzeichnet, daß der Kompensationsring (9) über eine Glas- oder Keramikschicht (8) mit dem Festelektrolyten (3) und der Druckring (6) über eine Glas- oder Keramikschicht (7) mit dem Kompensationsring (9) verbunden ist.

5. Elektrochemische Speicherzelle nach einem der Ansprüche 1 oder 2, dadurch gekennzeichnet, daß der Kompensationsring (9) im Inneren des Festelektrolyten (3) angeordnet und über eine Glas- oder Keramikschicht (8) mit der Innenfläche des Festelektrolyten (3) verbunden ist, und daß der Druckring (6) über die Glas-oder Keramikschicht (7) an der Außenfläche des Festelektrolyten (3) befestigt ist.

6. Elektrochemische Speicherzelle nach einem der Ansprüche 1 bis 5, dadurch gekennzeichnet, daß der Zwischenraum (4) zwischen dem metallischen Gehäuse (2) und dem Festelektrolyten (3) durch den Druckring (6) und eine Glas- oder Keramikschicht (7) verschlossen ist.

7. Elektrochemische Speicherzelle nach einem der Ansprüche 1 bis 5, dadurch gekennzeichnet, daß der Zwischenraum (4) zwischen dem metallischen Gehäuse (2) und dem Festelektrolyten (3) durch zwei Glas- oder Keramikschichten (7 und 8), den Kompensationsring (9) und den Druckring (6) verschlossen ist.

8. Elektrochemische Speicherzelle nach einem der Ansprüche 1 bis 8, dadurch gekennzeichnet, daß der Druckring (6) an der Innenfläche des metallischen Gehäuses (2) angeschweißt ist.

**Claims**

1. Electrochemical storage cell (1) based on an alkali metal and a chalkogen, having at least one anode space (5) and one cathode space (4) which are separated from one another by an alkali metal ion-conducting solid electrolyte (3) and are bounded at least zonally by a metallic housing (2), the open end of the solid electrolyte (3) being fixed via a connecting element (6) to the housing (2), characterized in that at least one connecting element formed as a thrust ring (6) and at least one compensating ring (9) which absorbs the forces emanating from the thrust ring (6) are fixed to the open end of the solid electrolyte (3).

2. Electrochemical storage cell according to Claim 1, characterized in that the thrust ring (6) is made of metal or ceramics, preferably of ferritic chromium steel.

3. Electrochemical storage cell according to one of Claims 1 or 2, characterized in that the thrust ring (6) and the compensating ring (9) are arranged concentrically around the solid electrolyte (3) in such a way that the compensating ring (9) is positioned between the solid electrolyte (3) and the thrust ring (6).

4. Electrochemical storage cell according to one of Claims 1 to 3, characterized in that the compensating ring (9) is joined to the solid electrolyte (3) via a glass or ceramic layer (8) and the thrust ring (6) is joined to the compensating ring (9) via a glass or ceramic layer (7).

5. Electrochemical storage cell according to one of Claims 1 or 2, characterized in that the compensating ring (9) is arranged in the interior of the solid electrolyte (3) and is joined to the inner surface of the solid electrolyte (3) via a glass or ceramic layer (8), and that the thrust ring (6) is fixed via the glass or ceramic layer (7) to the outer surface of the solid electrolyte (3).

6. Electrochemical storage cell according to one of Claims 1 to 5, characterized in that the interspace (4) between the metallic housing (2) and the solid electrolyte (3) is sealed by the thrust ring (6) and a glass or ceramic layer (7).

7. Electrochemical storage cell according to one of Claims 1 to 5, characterized in that the interspace (4) between the metallic housing (2) and the solid electrolyte (3) is sealed by two glass or ceramic layers (7 and 8), the compensating ring (9) and the thrust ring (6).

8. Electrochemical storage cell according to one of Claims 1 to 7, characterized in that the thrust ring (6) is welded to the inner surface of the metallic housing (2).

## Revendications

1. Cellule d'accumulateur électrochimique (1) à base de métal alcalin et de chalcogène, comportant au moins un espace anodique (5) et un espace cathodique (4) séparés l'un de l'autre par un électrolyte solide (3) conduisant les ions alcalins et bordé, au moins par régions, par une enceinte métallique (2), l'électrolyte solide (3) étant fixé, à son extrémité ouverte, à cette enceinte (2) par un élément d'assemblage (6), caractérisé en ce qu'au moins un élément d'assemblage réalisé sous la forme d'un anneau de pression (6), et au moins un anneau de compensation (9) supportant les forces dues à cet anneau de pression (6) sont fixés à l'extrémité ouverte de l'électrolyte solide (3).

2. Cellule d'accumulateur électrochimique selon revendication 1, caractérisée en ce que l'anneau de pression (6) est en métal ou céramique, de préférence en acier ferritique au chrome.

3. Cellule d'accumulateur électrochimique selon l'une quelconque des revendications 1 ou 2, caractérisée en ce que l'anneau de pression (6) et l'anneau de compensation (9) sont agencés concentriquement autour de l'électrolyte solide (3), de manière que l'anneau de compensation (9) soit positionné entre l'électrolyte solide (3) et l'anneau de pression (6).

4. Cellule d'accumulateur électrochimique selon l'une quelconque des revendications 1 à 3, caractérisée en ce que l'anneau de compensation (9) est assemblé à l'électrolyte solide (3) par l'intermédiaire d'une couche de verre ou de céramique (8) et l'anneau de pression (6) est assemblé à l'anneau de compensation (9) par l'intermédiaire d'une couche de verre ou de céramique (7).

5. Cellule d'accumulateur électrochimique selon l'une quelconque des revendications 1 ou 2, caractérisé en ce que l'anneau de compensation (9) est agencé à l'intérieur de l'éléctrolyte solide (3) et est assemblé à la surface interne de l'électrolyte solide (3) par l'intermédiaire d'une couche de verre ou de céramique (8), et en ce que l'anneau de pression (6) est fixé à la surface externe de l'électrolyte solide (3) par l'intermédiaire de la couche de verre ou de céramique (7).

6. Cellule d'accumulateur électrochimique selon l'une quelconque des revendications 1 à 5, caractérisée en ce que l'espace intermédiaire (4) entre l'enceinte métallique (2) et l'électrolyte solide (3) est fermé par l'anneau de pression (6) et par une couche de verre ou de céramique (7).

7. Cellule d'accumulateur électrochimique selon l'une quelconque des revendications 1 à 5, caractérisée en ce que l'espace intermédiaire entre l'enceinte métallique (2) et l'électrolyte solide (3) est fermé par deux couches de verre ou de céramique (7 et 8), par l'anneau de compensation (9) et par l'anneau de pression (6).

8. Cellule d'accumulateur électrochimique selon l'une quelconque des revendications 1 à 8, caractérisée en ce que l'anneau de pression (6) est soudé à la surface interne de l'enceinte métallique (2).

Fig.1

## Fig.2